# EUROPEAN PATENT SPECIFICATION

(11) **EP 3 756 474 B1**
(45) Date of publication and mention of the grant of the patent: **06.03.2024**
(21) Application number: 19182345.9
(22) Date of filing: 25.06.2019
(51) Int. Cl.: A23L 27/00, A23L 27/10, C11B 1/00

(54) **AN EXTRACT OF PERSEA**
EXTRAKT VON PERSEA
EXTRAIT DE PERSEA

(43) Date of publication of application: 30.12.2020
(73) Proprietor: Analyticon Discovery GmbH, 14473 Potsdam (DE)
(72) Inventor: SIEMS, Karsten, 14552 Michendorf (DE); DALHOFF, Christian, 14552 Michendorf (DE); FEUSSI-TALA, Michel, 14480 Potsdam (DE); UHLENBROCK, Lukas, 38678 Clausthal-Zellerfeld (DE); STRUBE, Jochen, 37077 Göttingen (DE)
(74) Representative: Fabry, Bernd

(56) References cited:
- US-A1- 2003 130 532
- US-A1- 2010 034 944
- US-A1- 2011 217 251
- US-A1- 2016 108 013
- US-B1- 6 582 688

## Description

### AREA OF INVENTION

The present invention refers to the area of plant extracts, particularly extracts of *Persea americana* rich in avocadene, a process for obtaining such extracts and the use of these extracts for taste medication.

### BACKGROUND OF THE INVENTION

Avocado fruits (*Persea americana*) contain alkyl polyols with interesting activities in pharma, food, cosmetics and agrochemical applications. Major polyols in avocados are avocadene, avocadyne and acetates thereof.

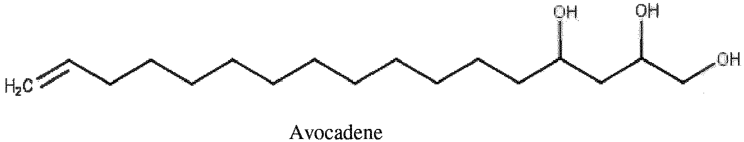

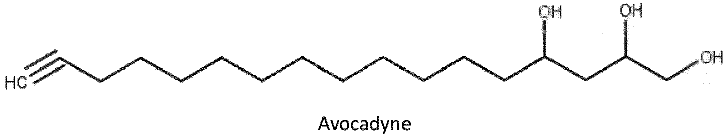

Avocadene and related polyols are interesting compounds in different food, pharma and cosmetic applications. The present invention describes an efficient and cost effective method for the production of enriched extracts and pure avocado polyols. For some application the use of edible part of the avocado - the fruit pulp - is recommended for the isolation of the pure compounds. So far, no efficient methods for the isolation of avocadene from avocado fruit pulp are described.

Avocado polyols show various useful applications:
- US 2010 0034944 A (IFF) and WO 2014 124214 A1 (GENERAL MILLS): Avocadene as taste modulator and salt taste enhancer
- Journal of Natural Products (1998), 61(6), p781-785**:** Cytotoxic and Insecticidal Constituents of the Unripe Fruit of Persea americana
- Phytochemistry (1991), 31(1), p93-6**.** Antifungal activity
- US 2011/217251 A1**:** Avocado polyols except for avocadene for inhibiting T-lymphocyte proliferation, TNF-alpha and IFN-gamma expression, and PLA2 activity.

Isolation of avocado polyols is usually done by extraction with organic solvents followed by solvent partition and finally chromatographic separation using normal phase or reverse phase methods (e.g. Israel Journal of Chemistry (1969), 7(1), p173-6). However, particularly separation of high amount of fatty acid derivatives (e.g. mono-, di- and triglycerides) and avocadene polyols by chromatographic methods is difficult and expensive.

### RELEVANT PRIOR ART

Extraction of the avocado oil from avocado pits yields oils containing less than 2% avocado polyols from Avocadene type (US 9,416,333 B2, LAB EXPANSCIENCE).

Extraction of avocado polyols from avocado seeds with butyl acetate yields an extract containing up to 30% of Avocado polyols (US 2015/0175933 A1, Senegal & Rosenblat). This extract may be further purified to yield avocado polyols with more than 95 % purity by re-crystallisation from hexane. Seeds usually contain higher amounts of avocado polyols than fruit pulp. This patent describes the use of avocado seeds only and did not mention the use of the fruit pulp of avocado.

Saponification of the pressed oil followed by distillation yields fractions containing 25% of Avocado polyols but mainly thermal degradation products with a furan ring instead of the polyol. (US 6,582,688 B1, LAB EXPANSCIENCE)

US 2016/108013 A1 discloses selective extraction of unsaponifiable compounds from avocadoa with a biphasic solvent mixture ethanol/hexane, wherein the first step of extraction is concomitant with saponification and in the ethanol phase there are a high amount of polyhydroxylated fatty alcohols.

### OBJECT OF THE INVENTION

Therefore, it has been the object of the present invention providing an improved process or obtaining extracts comprising at least 50 wt.-percent, preferably at least 90 wt.-percent avocado polyols (avocadene, avocadyne and their esters) and particularly extracts comprising at least 95 wt.-percent, preferably at least 98 wt.-percent avocadene.

### BRIEF DESCRIPTION OF THE INVENTION

A first object of the present invention relates to a respective process for obtaining an extract of *Persea,* in particular *Persea americana* (Avocado) comprising at least 90 wt.-% avocado polyols and preferably at least 95 wt.-% avocadene, comprising or consisting of the following steps:
(a) providing a source of *Persea;*
(b) subjecting said source of *Persea* to an extraction step preferably using organic solvents to obtain a first extract;
(c) subjecting said first extract to saponification to obtain a second extract ;
(d) adding a source of calcium to said second extract to precipitate calcium soaps;
(e) subjecting the product of step (d) to a separation step to obtain a third extract and said precipitated calcium salts; and optionally
(f) subjecting said third extract to further purification.

The polyols are extracted by KOH, which hydrolyses polyol acetates and glycerides of fatty acids. Addition of calcium salts yields a precipitate of fatty acid Ca soap and avocado polyols. Avocado polyols can be extracted selectively from the precipitate by for example ethyl acetate. Re-crystallisation yields a mixture of avocadene and avocadyne with a purity of at least 90 wt.-percent. Thus, a fraction with at least 90 wt.-percent avocado polyols can be prepared without any chromatographic step. Further separation of avocadene and avocadyne is possible by reverse phase chromatography or by further re-crystallisation.

In contrast to the recommendation from the prior art (for example US 2015 0175933 A1**)** extraction and re-crystallisation with ethyl acetate yielded a mixture of avocadene polyols with a purity of more than 80%. Surprisingly, it has been found possible to reduce or even completely avoid hexane or other toxic solvents in the extraction and re-crystallisation process by using other solvents like for example ethyl acetate or water.

The process according to the invention consists of three sections:
- Extraction
- Saponification and Separation, and
- Purification.

Purification is an optional section of the process which is required in case it is intended to obtain avocadene in high purity.

### EXTRACTION

The extracts according to the present invention may be prepared by methods known per se, i.e. for example by aqueous, alcoholic or aqueous/alcoholic extraction of the plants or parts thereof or pits of the avocados. Particularly preferred are the avocado fruits or pulps obtained therefrom.

Suitable extraction processes are any conventional extraction processes, such as maceration, re-maceration, digestion, agitation maceration, vortex extraction, ultrasonic extraction, counter current extraction, percolation, re-percolation, evacolation (extraction under reduced pressure), diacolation and solid/liquid extraction under continuous reflux. Percolation is advantageous for industrial use. Any size reduction methods known to the expert, for example freeze grinding, may be used. Preferred solvents for the extraction process are organic solvents, water (preferably hot water with a temperature above 80 °C and more particularly above 95 °C or mixtures of organic solvents and water, more particularly low molecular weight alcohols with more or less high water contents. Extraction with n-pentane, n-hexane, ethyl acetate, butyl acetate and mixtures thereof is particularly preferred.

Also preferred is to perform a double extraction, which means that the fruits or the pulp is extracted in the first step for example with n-hexane and the remainder in a second step with for example ethyl acetate. Subsequently, the extracts are combined and further processed.

In an alternative, extraction can be performed with water or lower alcohols, such as ethanol containing an amount of an alkaline source, such as sodium hydroxide or potassium hydroxide. In this case extraction and the following step saponification take place at the same time.

The extraction process is generally carried out at about 20 °C to about 100 °C and preferably at about 50 °C to about 70 °C. In one preferred embodiment, the extraction process is carried out in an inert gas atmosphere to avoid oxidation of the ingredients of the extract. This is particularly useful where extraction is carried out at temperatures above 40 °C. The extraction times are selected by the expert in dependence upon the starting material, the extraction process, the extraction temperature and the ratio of solvent to raw material, etc.

### SAPONIFICATION

In the course of the present invention removal of fatty acid components from the extracts is essential and the most critical feature. For this purpose, all fatty acids are saponified to produce soluble alkaline soaps which in a second step are precipitated as insoluble calcium soaps. In a final step, the soaps are separated from the extracts. This section of the process leads to extracts consisting of about 50 to about 90 wt.-percent avocado polyols. The extracts can be further purified to obtain avocadene of more than 98 % purity.

As indicated above, in case extraction is carried out using water or lower alcohols such as ethanol as the solvent, alkaline sources can be added and saponification can be achieved at the same time.

Therefore, another embodiment of the present invention refers to an alternative process for obtaining an extract of *Persea,* in particular *Persea americana* (Avocado) comprising at least 90 wt.-% avocado polyols and preferably at least 95 wt.-% avocadene, comprising or consisting of the following steps:
(a) providing a source of *Persea;*
(b) subjecting said source of *Persea* to a combined extraction and saponification step using a source of aqueous or alcoholic alkaline compounds, as for example aqueous or ethanolic KOH, to obtain a first extract;
(c) adding a source of calcium to said first extract to precipitate calcium soaps;
(d) subjecting the product of step (c) to a separation step to obtain a third extract and said precipitated calcium salts; and optionally
(e) subjecting said third extract to further purification.

In case extraction and saponification are distinguished steps, the usual operation is treating the first extract with a source of an alkaline hydroxide optionally as an aqueous or alcoholic solution to obtain a second extract, wherein the fatty acids present in said second extract are transferred into their soluble alkaline soaps. Suitable saponification agents are aqueous or ethanolic solutions of sodium hydroxide or potassium hydroxide. The operation is conducted typically at a temperature ranging from about 50 °C to about 90 °C over a period of 12 to 20 hours and preferably 15 to 16 hours.

Once saponification is completed and all or almost all fatty acids have been converted into their soluble alkaline salts the mixture is treated with a calcium salt to precipitate said soluble alkaline soaps present in the extract as calcium soaps. Suitable precipitation agents are solutions of soluble calcium salts, preferably calcium chloride. Once precipitation is complete it is an optional step to remove alcoholic solvents by evaporation or distillation.

After precipitation the calcium soaps form a gum-like substance which is not easy to filtrate. In the alternative it is advantageous to separate the liquid phase - which forms the third extract - from the soaps by filtration or centrifugation. Said third extract can be further purified by another extraction providing the fourth extract. Typically, this extraction step is conducted using ethyl acetate or butyl acetate.

Another preferable alternative is to use aqueous potassium hydroxide for one step saponification and extraction. In this case the precipitation with calcium chloride solution yields an amorphous, grey precipitate and separation is possible by pressurized filtration yielding the third extract directly.

On the other hand the calcium soap gum is still wet and contains some active material. It is therefore subjected to filtration, preferably under pressure to obtain the more or less dry soaps and a mother liquor, which is combined with the forth extract.

### PURIFICATION

In case extracts with a high content of avocadene are desired either
(i) said third extract or
(ii) the combined forth extract and mother liquor
is subjected to further one-step or two-step purification, more particularly to a chromatographic purification procedure.

A first purification step can encompass dewatering and subsequent crystallization or recrystallization from a suitable solvent such as for example ethyl acetate.

**MPLC.** An alternative first or a subsequent second purification step could be a medium pressure liquid chromatography. MPLC is able to separate substances based on differential adsorption of compounds to the adsorbent; compounds move through the column at different rates, allowing them to be separated into fractions. The technique is widely applicable, as many different adsorbents (normal phase, reversed phase, or otherwise) can be used with a wide range of solvents. The technique can be used on scales from micrograms up to kilograms. The main advantage of MPLC is the relatively low cost and disposability of the stationary phase used in the process. The latter prevents cross-contamination and stationary phase degradation due to recycling. Column chromatography can be done using gravity to move the solvent, or using compressed gas to push the solvent through the column.

To perform MPLC a column is prepared by packing a solid absorbent into a cylindrical glass or plastic tube. The size will depend on the amount of compound being isolated. The base of the tube contains a filter, either a cotton or glass wool plug, or glass frit to hold the solid phase in place. A solvent reservoir may be attached at the top of the column.

Two methods are generally used to prepare a column: the dry method and the wet method. For the dry method, the column is first filled with dry stationary phase powder, followed by the addition of mobile phase, which is flushed through the column until it is completely wet, and from this point is never allowed to run dry. For the wet method, a slurry is prepared of the eluent with the stationary phase powder and then carefully poured into the column. The top of the silica should be flat, and the top of the silica can be protected by a layer of sand. Eluent is slowly passed through the column to advance the organic material.

The individual components are retained by the stationary phase differently and separate from each other while they are running at different speeds through the column with the eluent. At the end of the column they elute one at a time. During the entire chromatography process the eluent is collected in a series of fractions. Fractions can be collected automatically by means of fraction collectors. The productivity of chromatography can be increased by running several columns at a time. In this case multi stream collectors are used. The composition of the eluent flow can be monitored and each fraction is analyzed for dissolved compounds, e.g. by analytical chromatography, UV absorption spectra, or fluorescence. Colored compounds (or fluorescent compounds with the aid of a UV lamp) can be seen through the glass wall as moving bands.

The *stationary phase* or *adsorbent* in column chromatography is a solid. The most common stationary phase for column chromatography is silica gel, the next most common being alumina. Cellulose powder has often been used in the past. A wide range of stationary phases are available in order to perform ion exchange chromatography, reversed-phase chromatography (RP), affinity chromatography or expanded bed adsorption (EBA). The stationary phases are usually finely ground powders or gels and/or are microporous for an increased surface; though in EBA a fluidized bed is used. There is an important ratio between the stationary phase weight and the dry weight of the analyte mixture that can be applied onto the column. For silica column chromatography, this ratio lies within 20:1 to 100:1, depending on how close to each other the analyte components are being eluted.

The *mobile phase* or *eluent* is a solvent or a mixture of solvents used to move the compounds through the column. It is chosen so that the retention factor value of the compound of interest is roughly around 0.2 - 0.3 in order to minimize the time and the amount of eluent to run the chromatography. The eluent has also been chosen so that the different compounds can be separated effectively. The eluent is optimized in small scale pretests, often using thin layer chromatography (TLC) with the same stationary phase.

There is an optimum flow rate for each particular separation. A faster flow rate of the eluent minimizes the time required to run a column and thereby minimizes diffusion, resulting in a better separation. However, the maximum flow rate is limited because a finite time is required for the analyte to equilibrate between the stationary phase and mobile phase, (to be calculated using Van Deemter's equation). A simple laboratory column runs by gravity flow. The flow rate of such a column can be increased by extending the fresh eluent filled column above the top of the stationary phase or decreased by the tap controls. Faster flow rates can be achieved by using a pump or by using compressed gas (e.g. air, nitrogen, or argon) to push the solvent through the column (flash column chromatography). The particle size of the stationary phase is generally finer in flash column chromatography than in gravity column chromatography. For example, one of the most widely used silica gel grades in the former technique is mesh 230 to 400 (40 to 63 µm), while the latter technique typically requires mesh 70 to 230 (63 to 200 µm) silica gel.

Preferably, the fractions enriched in avocadene are obtained from MPLC using silica gel as the stationary phase eluted with n-hexane-ethyl acetate 30:70, and pure ethyl acetate.

**HPLC.** The fractions obtained from MPLC show a content of avocadene of at least 90 wt.-percent. For further enrichment of avocadene the fractions are subjected to HPLC. Highperformance liquid chromatography (formerly referred to as high-pressure liquid chromatography) is a technique in analytical chemistry used to separate, identify, and quantify each component in a mixture. It relies on pumps to pass a pressurized liquid solvent containing the sample mixture through a column filled with a solid adsorbent material. Each component in the sample interacts slightly differently with the adsorbent material, causing different flow rates for the different components and leading to the separation of the components as they flow out of the column.

HPLC is distinguished from traditional ("low pressure") liquid chromatography because operational pressures are significantly higher (50-350 bar), while ordinary liquid chromatography typically relies on the force of gravity to pass the mobile phase through the column. Due to the small sample amount separated in analytical HPLC, typical column dimensions are 2.1to 4.6 mm diameter, and 30 to 250 mm length. Also HPLC columns are made with smaller adsorbent particles (2 to 50 µm in average particle size). This gives HPLC superior resolving power (the ability to distinguish between compounds) when separating mixtures, which makes it a popular chromatographic technique.

The sample mixture to be separated and analyzed is introduced, in a discrete small volume (typically microliters), into the stream of mobile phase percolating through the column. The components of the sample move through the column at different velocities, which are a function of specific physical interactions with the adsorbent (also called stationary phase). The velocity of each component depends on its chemical nature, on the nature of the stationary phase (column) and on the composition of the mobile phase. The time at which a specific analyte elutes (emerges from the column) is called its retention time. The retention time measured under particular conditions is an identifying characteristic of a given analyte.

Many different types of columns are available, filled with adsorbents varying in particle size, and in the nature of their surface ("surface chemistry"). The use of smaller particle size packing materials requires the use of higher operational pressure ("backpressure") and typically improves chromatographic resolution (the degree of peak separation between consecutive analytes emerging from the column). Sorbent particles may be hydrophobic or polar in nature.

Common mobile phases used include any miscible combination of water with various organic solvents (the most common are acetonitrile and methanol). Some HPLC techniques use water-free mobile phases (see normal-phase chromatography below). The aqueous component of the mobile phase may contain acids (such as formic, phosphoric or trifluoroacetic acid) or salts to assist in the separation of the sample components. The composition of the mobile phase may be kept constant ("isocratic elution mode") or varied ("gradient elution mode") during the chromatographic analysis. Isocratic elution is typically effective in the separation of sample components that are very different in their affinity for the stationary phase. In gradient elution the composition of the mobile phase is varied typically from low to high eluting strength. The eluting strength of the mobile phase is reflected by analyte retention times with high eluting strength producing fast: elution (=short retention times). A typical gradient profile in reversed phase chromatography might start at 5% acetonitrile (in water or aqueous buffer) and progress linearly to 95% acetonitrile over 5-25 minutes. Periods of constant mobile phase composition may be part of any gradient profile. For example, the mobile phase composition may be kept constant at 5% acetonitrile for 1-3 min, followed by a linear change up to 95% acetonitrile.

The chosen composition of the mobile phase (also called eluent) depends on the intensity of interactions between various sample components ("analytes") and stationary phase (e.g., hydrophobic interactions in reversed-phase HPLC). Depending on their affinity for the stationary and mobile phases analytes partition between the two during the separation process taking place in the column. This partitioning process is similar to that which occurs during a liquid-liquid extraction but is continuous, not step-wise. In this example, using a water/acetonitrile gradient, more hydrophobic components will elute (come off the column) late, once the mobile phase gets more concentrated in acetonitrile (i.e., in a mobile phase of higher eluting strength).

The choice of mobile phase components, additives (such as salts or acids) and gradient conditions depends on the nature of the column and sample components. Often a series of trial runs is performed with the sample in order to find the HPLC method which gives adequate separation.

Preferably, HPLC was carried out in a preparative Kromasil C₁₈ column (250 × 50 mm, 10 µm), using water 100% (A) and methanol 100% (B) as eluent, at 80 mL/min flow rate; in the alternative methanol can be replaced by ethanol The solvent system was 72-98% B linear. The system was operated with an evaporative light scattering detector (ELSD) and a photodiode detector (PDA) set at 250 nm. Achieved were fractions consisting of at least 95 wt.-percent, typically more than 98 wt.-percent avocadene.

### INDUSTRIAL APPLICATION

Herein disclosed, but not part of the invention is a method for modulating and/or enhancing the salty taste of an oral composition encompassing the following steps:
(i) providing an extract of Persea obtained according to the process of Claim 1; and
(ii) adding a working amount of said extract to a composition that is intended for oral uptake.

Also disclosed, but not part of the invention is the use of an extract obtained according to the process of Claim 1 for modulating and/or enhancing the salty taste of oral compositions. A "working amount" means an amount suitable to modulate or effect or increase the salty taste impression of a product for oral uptake as for example 0.0001 to 0.1, preferably 0.001 to 0.01 wt.-percent calculated on the weight of the oral composition. Typically, these products represent food products, particularly snacks.

The extracts are also useful for example as anti-fungal actives.

### EXAMPLES

### Example 1

5 kg of fresh avocados were separated into seed, peel and fruit pulp. 1600 g of the fruit pulp were cut into small pieces and freeze-dried to yield 220g dried material.

100 g of freeze-dried fruit pulp of *Persea americana* was moulded and extracted successively with 2x350 mL of n-hexane and 2×350 mL of ethyl acetate to give 19.32 g (**Extract 1A**) and 4.30 g (**Extract 1B**) of crude extract, respectively. These two extracts were combined on the basis of their TLC profiling and called **Extract 1.**

23 g of **Extract 1** was dissolved in a solution of potassium hydroxide in ethyl alcohol (9.2g/230 mL) and refluxed for five hours (at 80 °C) to achieve **Extract 2.** 140 mL of distilled water and 63 g of CaCO₃ then were added, respectively, and further heat to reflux for four hours. After that, the hot mixture was cooled to 30 °C at room temperature, and the excess of ethanol reduced by evaporation under reduced pressure. Further distilled water was added to the mixture to optimize the formation of calcium soap.

The calcium soap precipitated like a gum and was difficult to filtrate. The solid-liquid mixture of **Extract 2** was therefore separated by centrifugation. From this separation, the aqueous phase forming **Extract 3** was further extracted with ethyl acetate (3 x 650 mL) to give the enriched avocadene called **Extract 4.** The gum obtained from the centrifugation was triturated in 350 mL of ethyl acetate and then filtered of by suction to give more **Extract 4** ("mother liquor") and a residual powder consisting of calcium soaps or calcium soaps coated with calcium carbonate.

For the next investigation the overall process was monitored by Thin Layer Chromatography (TLC); run with an authentic sample of avocadene and a solvent system of CHCl₃-MeOH (94:06).

**Extract 4** (11.10 g) was fractionated on a normal phase MPLC (silica gel eluted with n-Hexane-ethyl acetate 30:70, and pure ethyl acetate) to give three enriched avocadene fractions: **Fraction A1** (0.39 g), **Fraction A2** (4.10 g) and **Fraction A3** (1.35 g). The quantitative analyses and the ¹H NMR profile of these fractions showed that each of them was a mixture of avocadene and related metabolites. These fractions were therefore further purified through HPLC.

HPLC separations of said fractions was carried out in a preparative Kromasil C₁₈ column (250 × 50 mm, 10 µm), using water 100% (A) and methanol 100% (B) as eluent, at 80 mL/min flow rate. The solvent system was 72-98% B linear. The system was operated with an evaporative light scattering detector (ELSD) and a photodiode detector (PDA) set at 250 nm to give about 1.200 mg extracts of >98% pure avocadene.

### Example 2

This example shows a process encompassing the steps of
- Extraction with aqueous potassium hydroxide
- Precipitation
- Filtration
- Washing
- Alcoholic extraction
- Concentration/Drying
- Solubilisation in ethyl acetate
- Crystallisation
- Purification by reverse phase chromatography

600 g fresh avocado pulp was extracted with 1000 ml 2,5M KOH at 100°C and a slight overpressure to avoid bumping and foaming for 15 h while stirring vigorously. After cooling down to 20 °C 1,900 ml 1 M CaCl₂ solution was added. The precipitate was collected by filtration using 2 bar pressure and the precipitate was washed using 4000 ml water. The remaining precipitate was extracted at 20°C with 2,000 ml ethanol to yield an enriched extract with avocado polyols, mainly avocadene and avocadene. The enriched extract was reduced to dryness and solubilized in ethyl acetate. The volume of the ethyl acetate was adjusted to a concentration of 50 g/l avocadene. The resulting clear solution was cooled down slowly (1°C/min) to 0 °C. The precipitation started at ca. 5°C. 23 ml solution with a concentration of 50 g/l was obtained and yielded 2.4 g precipitate containing 1.01 g avocadene (by HPLC).

### Example 3

This example shows a process encompassing the steps of
- Extraction with aqueous potassium hydroxide
- Precipitation
- Filtration
- Washing
- Ethyl acetate extraction
- Concentration/Drying
- Solubilisation in ethyl acetate
- Crystallisation
- Purification by reverse phase chromatography

600 g fresh avocado pulp was extracted with 1000 ml 2,5M KOH at 100°C and a slight overpressure to avoid bumping and foaming for 15 h while stirring vigorously. After cooling down to 20 °C 1900 ml 1 M CaCl₂ solution was added. The precipitate was collected by filtration using 2 bar pressure and the precipitate was washed using 4000 ml water. The remaining precipitate was extracted at 20°C with 2,000 ml ethyl acetate to yield an enriched extract with avocado polyols, mainly avocadene and avocadene. The enriched extract is concentrated under vacuum to yield a concentrated extract containing 50 g/l avocadene. The volume of the ethyl acetate was adjusted to a concentration of 50 g/l avocadene. This clear solution was cooled down slowly (1°C/min) to 0 °C. The precipitation started at ca. 5°C. 23 ml solution with a concentration of 50 g/I and yielded 1.2 g precipitate containing 0.52 g avocadene (by HPLC).

### Example 4

This example shows a process encompassing the steps of
- Extraction with aqueous potassium hydroxide
- Precipitation
- Filtration
- Washing
- Alcoholic extraction
- Adjustment of concentration
- Purification by reverse phase chromatography

600 fresh avocado pulp was extracted with 1000 ml 2,5M KOH at 100°C and a slight overpressure to avoid bumping and foaming for 15 h while stirring vigorously. After cooling down to 20 °C 1900 ml 1 M CaCl₂ solution was added. The precipitate was collected by filtration using 2 bar pressure and the precipitate was washed using 4000 ml water. The remaining precipitate was extracted at 20°C with 1,600 ml ethanol to yield an enriched extract with avocado polyols, mainly avocadene and avocadene. The enriched extract was concentrated under vacuum to yield 50 mL of concentrated extract containing 20 g/L avocadene. The concentration of avocadene was adjusted to 10 g/L using water and separated by RP-HPLC yielding 1.08 g of product.

## Claims

1. A process for obtaining an extract of *Persea,* in particular *Persea americana* (Avocado) comprising at least 90 wt.-% avocado polyols and preferably at least 95 wt.-% avocadene, comprising or consisting of the following steps:
(a) providing a source of *Persea;*
(b) subjecting said source of *Persea* to an extraction step preferably using organic solvents to obtain a first extract;
(c) subjecting said first extract to saponification to obtain a second extract;
(d) adding a source of calcium to said second extract to precipitate calcium soaps;
(e) subjecting the product of step (d) to a separation step to obtain a third extract and said precipitated calcium salts; and optionally
(f) subjecting said third extract to further purification.

2. A process for obtaining an extract of *Persea,* in particular *Persea americana* (Avocado) comprising at least 90 wt.-% avocado polyols and preferably at least 95 wt.-% avocadene, comprising or consisting of the following steps:
(a) providing a source of *Persea;*
(b) subjecting said source of *Persea* to a combined extraction and saponification step using a source of aqueous or alcoholic alkaline compounds to obtain a first extract;
(c) adding a source of calcium to said first extract to precipitate calcium soaps;
(d) subjecting the product of step (c) to a separation step to obtain a third extract and said precipitated calcium salts; and optionally
(e) subjecting said third extract to further purification.

3. The process of Claim 1 or 2, wherein said source of *Persea* is either an avocado fruit or a pulp obtained from said avocado fruit.

4. The process of Claim 1, wherein the extraction to obtain the first extract is carried out using at least one organic solvent selected from the group consisting of ethanol, n-heptane, n-hexane, cyclohexane, ethyl acetate, butyl acetate, acetone, methylethyl ketone and mixtures thereof.

5. The process of Claim 1, wherein the first extract is treated with a source of an alkaline hydroxide optionally as an aqueous or alcoholic solution to obtain a second extract, wherein the fatty acids present in said second extract are transferred into their soluble alkaline soaps.

6. The process of Claim 1, wherein the second extract after saponification has taken place is treated with a calcium salt and said soluble alkaline soaps present in the extract are precipitated as calcium soaps.

7. The process of Claim 1, wherein said calcium soaps are separated from the liquid retardant forming the third extract by filtration or centrifugation.

8. The process of Claim 7, wherein said third extract is subjected to another extraction step using at least one organic solvent to obtain a fourth extract.

9. The process of Claim 7, wherein said calcium soaps, still associated with some liquid, are subjected to a filtration step to obtain the pure calcium soaps and mother liquor.

10. The process of Claim 8 and 9, wherein said forth extract and said mother liquor are combined and optionally subjected to further purification.

11. The process of Claim 1, wherein
(i) said third extract or
(ii) the combined forth extract and mother liquor
is subjected to a first purification step by means of MPLC to obtain at least one fraction enriched in avocadene.

12. The process of Claim 11, wherein said at least one fraction enriched in avocadene is subjected to HPLC to obtain at least one fraction consisting of at least 95 wt.-percent. avocadene.

## Patentansprüche

1. Ein Verfahren zur Gewinnung eines Extrakts aus *Persea,* insbesondere *Persea americona* (Avocado), umfassend mindestens 90 Gew.-% Avocadopolyole und vorzugsweise mindestens 95 Gew.-% Avocadoden, umfassend oder bestehend aus den folgenden Schritten
(a) Bereitstellung einer Persea-Quelle;
(b) Unterziehen der Persea-Quelle einem Extraktionsschritt, vorzugsweise unter Verwendung organischer Lösungsmittel, um einen ersten Extrakt zu erhalten;
(c) Unterziehen des ersten Extrakts einer Verseifung, um einen zweiten Extrakt zu erhalten;
(d) Zugabe einer Calciumquelle zum zweiten Extrakt, um Calciumseifen auszufällen;
(e) Unterziehen des Produkts aus Schritt (d) einem Trennschritt, um einen dritten Extrakt und die ausgefällten Calciumsalze zu erhalten; und optional
(f) Unterziehen des dritten Extrakts einer weiteren Reinigung.

2. Ein Verfahren zur Gewinnung eines Extrakts aus *Persea,* insbesondere *Persea americona* (Avocado), umfassend mindestens 90 Gew.-% Avocadopolyole und vorzugsweise mindestens 95 Gew.-% Avocaden, umfassend oder bestehend aus den folgenden Schritten:
(a) Bereitstellung einer Persea-Quelle;
(b) Unterziehen der Persea-Quelle einem kombinierten Extraktions- und Verseifungsschritt unter Verwendung einer Quelle wässriger oder alkoholischer alkalischer Verbindungen, um einen ersten Extrakt zu erhalten;
(c) Zugabe einer Calciumquelle zu dem ersten Extrakt, um Calciumseifen auszufällen;
(d) Unterziehen des Produkts aus Schritt (c) einem Trennschritt, um einen dritten Extrakt und die ausgefällten Calciumsalze zu erhalten; und optional
(e) Unterziehen des dritten Extrakts einer weiteren Reinigung.

3. Das Verfahren nach Anspruch 1 oder 2, wobei die Persea-Quelle entweder eine Avocadofrucht oder ein aus der Avocadofrucht gewonnenes Fruchtfleisch ist.

4. Das Verfahren nach Anspruch 1, wobei die Extraktion zum Erhalt des ersten Extrakts unter Verwendung mindestens eines organischen Lösungsmittels durchgeführt wird, ausgewählt aus der Gruppe bestehend aus Ethanol, n-Heptan, n-Hexan, Cyclohexan, Ethylacetat, Butylacetat, Aceton, Methylethyl Keton und Mischungen davon.

5. Das Verfahren nach Anspruch 1, wobei der erste Extrakt mit einer Quelle eines alkalischen Hydroxids, wahlweise als wässrige oder alkoholische Lösung, behandelt wird, um einen zweiten Extrakt zu erhalten, wobei die im zweiten Extrakt vorhandenen Fettsäuren in ihre löslichen alkalischen Seifen überführt werden.

6. Das Verfahren nach Anspruch 1, wobei der zweite Extrakt nach erfolgter Verseifung mit einem Calciumsalz behandelt wird und die im Extrakt vorhandenen löslichen alkalischen Seifen als Calciumseifen ausgefällt werden.

7. Das Verfahren nach Anspruch 1, wobei die Calciumseifen durch Filtration oder Zentrifugation von dem flüssigen Verzögerungsmittel, das den dritten Extrakt bildet, abgetrennt werden.

8. Das Verfahren nach Anspruch 7, wobei der dritte Extrakt einem weiteren Extraktionsschritt unter Verwendung mindestens eines organischen Lösungsmittels unterzogen wird, um einen vierten Extrakt zu erhalten.

9. Das Verfahren nach Anspruch 7, wobei die Calciumseifen, die noch mit etwas Flüssigkeit verbunden sind, einem Filtrationsschritt unterzogen werden, um reine Calciumseifen und Mutterlauge zu erhalten.

10. Das Verfahren nach Anspruch 8 und 9, wobei der vierte Extrakt und die Mutterlauge kombiniert und gegebenenfalls einer weiteren Reinigung unterzogen werden.

11. Das Verfahren nach Anspruch 1, wobei
(i) der dritte Extrakt oder
(ii) der vierte Extrakt kombiniert mit der Mutterlauge
einem ersten Reinigungsschritt mittels MPLC unterzogen wird, um mindestens eine mit Avocaden angereicherte Fraktion zu erhalten.

12. Das Verfahren nach Anspruch 11, wobei die mindestens eine mit Avocaden angereicherte Fraktion einer HPLC unterzogen wird, um mindestens eine Fraktion zu erhalten, die zu mindestens 95 Gew.-% aus Avocaden besteht.

## Revendications

1. Un procédé d'obtention d'un extrait de Persea, en particulier de Persea americana (avocat), comprenant au moins 90 % en poids de polyols d'avocat et, de préférence, au moins 95 % en poids d'avocats, comprenant ou consistant en les étapes suivantes
(a) fournir une source de Persea ;
(b) soumettre la source de Persea à une étape d'extraction, de préférence en utilisant des solvants organiques, afin d'obtenir un premier extrait ;
(c) soumettre le premier extrait à une saponification pour obtenir un deuxième extrait ;
(d) ajouter une source de calcium au deuxième extrait pour précipiter les savons de calcium ;
(e) soumettre le produit de l'étape (d) à une étape de séparation pour obtenir un troisième extrait et les sels de calcium précipités ; et éventuellement
(f) soumettre le troisième extrait à une purification supplémentaire.

2. Le procédé d'obtention d'un extrait de Persea, en particulier de Persea americana (avocat), comprenant au moins 90 % en poids de polyols d'avocats et de préférence au moins 95 % en poids d'avocadene, comprenant ou consistant en les étapes suivantes :
(a) fournir une source de Persea ;
(b) soumettre la source de Persea à une étape combinée d'extraction et de saponification en utilisant une source de composés alcalins aqueux ou alcooliques afin d'obtenir un premier extrait ;
(c) ajouter une source de calcium au premier extrait pour précipiter les savons de calcium ;
(d) soumettre le produit de l'étape (c) à une étape de séparation pour obtenir un troisième extrait et les sels de calcium précipités ; et éventuellement
(e) soumettre le troisième extrait à une purification supplémentaire.

3. Le procédé selon la revendication 1 ou 2, dans lequel la source de Persea est soit un fruit d'avocat, soit une pulpe obtenue à partir du fruit d'avocat.

4. Le procédé selon la revendication 1, dans lequel l'extraction pour obtenir le premier extrait est réalisée en utilisant au moins un solvant organique choisi dans le groupe constitué par l'éthanol, le n-heptane, le n-hexane, le cyclohexane, l'acétate d'éthyle, l'acétate de butyle, l'acétone, la méthyléthylcétone et leurs mélanges.

5. Le procédé selon la revendication 1, dans lequel le premier extrait est traité avec une source d'hydroxyde alcalin, éventuellement sous forme de solution aqueuse ou alcoolique, pour obtenir un deuxième extrait, les acides gras présents dans le deuxième extrait étant convertis en leurs savons alcalins solubles.

6. Le procédé selon la revendication 1, dans lequel le deuxième extrait, après avoir été saponifié, est traité avec un sel de calcium et les savons alcalins solubles présents dans l'extrait sont précipités sous forme de savons de calcium.

7. Le procédé selon la revendication 1, dans lequel les savons de calcium sont séparés par filtration ou centrifugation de l'agent retardateur liquide qui forme le troisième extrait.

8. Le procédé selon la revendication 7, dans lequel le troisième extrait est soumis à une étape d'extraction supplémentaire en utilisant au moins un solvant organique pour obtenir un quatrième extrait.

9. Le procédé selon la revendication 7, dans lequel les savons de calcium qui sont encore associés à un peu de liquide sont soumis à une étape de filtration pour obtenir des savons de calcium purs et de la liqueur mère.

10. Le procédé selon les revendications 8 et 9, dans lequel le quatrième extrait et la liqueur mère sont combinés et éventuellement soumis à une purification supplémentaire.

11. Le procédé selon la revendication 1, dans lequel
(i) le troisième extrait ou
(ii) le quatrième extrait combiné avec la liqueur mère
est soumis à une première étape de purification par MPLC afin d'obtenir au moins une fraction enrichie en avocadene.

12. Le procédé selon la revendication 11, dans lequel ladite au moins une fraction enrichie en avocadene est soumise à une HPLC pour obtenir au moins une fraction composée d'au moins 95 % en poids d'avocadene.
